# DEMANDE DE BREVET EUROPEEN

(11) **EP 3 096 417 A1**
(43) Date de publication de la demande: **23.11.2016**
(21) Numéro de dépôt: 16169492.2
(22) Date de dépôt: 13.05.2016
(51) Int. Cl.: H01R 39/38, H02K 5/14

(54) **ENSEMBLE POUR PORTE-BALAIS DE MOTEUR ÉLECTRIQUE DE DÉMARREUR DE VÉHICULE AUTOMOBILE**

(30) Priorité: 21.05.2015 FR 1554576
(71) Demandeur: VALEO EQUIPEMENTS ELECTRIQUES MOTEUR, 94046 Créteil Cedex (FR)
(72) Inventeur: NALIN, Marie-Ange, 01150 CHAZEY SUR AIN (FR); PAYS, Wilfried, 38510 SERMERIEU (FR); MOLLON, Pierre, 38780 ESTRABLIN (FR); BOST, Alain, 38080 L'ISLE D'ABEAU (FR); GENTIL, Maximilien, 69960 CORBAS (FR)
(74) Mandataire: Vaufleury, Guillaume

(57) **Abrégé**

L'invention porte principalement sur un ensemble pour porte-balais de moteur électrique de démarreur de véhicule automobile comportant:
- un balai (15),
- un ressort à spirales (36) comportant:
- une partie enroulée (37),
- un bras (39) ayant une zone d'appui (40) contre une portion (41) d'une face dudit balai (15) pour la mise en contact d'une autre face dudit balai (15) avec un collecteur (17),
- une cage à balai (13) dans laquelle est positionné ledit balai (15),
caractérisé en ce qu'il comprend en outre une couche (44) de réduction de frottement située entre ladite zone d'appui (40) dudit ressort à spirales (36) et ladite portion (41) de la face d'appui dudit balai (15).

## Description

L'invention porte sur un ensemble pour porte-balais de moteur électrique de démarreur de véhicule automobile, ainsi que sur le démarreur de véhicule automobile correspondant. L'invention trouve une application particulièrement avantageuse, mais non exclusive, avec les démarreurs de véhicule automobile, en particulier ceux installés dans les véhicules équipés de la fonction d'arrêt et de re-démarrage automatique du moteur thermique (fonction dite "stop and start" en anglais).

De façon connue en soi, un porte-balais est monté sur l'arbre du rotor d'un démarreur de manière à faire coopérer les balais avec un collecteur électrique solidaire de l'arbre du rotor. Le porte-balais comporte une platine de support portant un ensemble de cages servant chacune de logement à un balai. Les balais réalisés en matériau électriquement conducteur permettent l'alimentation électrique du rotor par commutation du courant électrique dans les conducteurs du rotor.

A cet effet, chaque balai comporte une face destinée à venir frotter contre les lames conductrices du collecteur reliées au bobinage du rotor. Un moyen élastique, tel qu'un ressort, exerce sur chaque balai reçu dans une cage un effort en direction du collecteur pour assurer le contact entre le balai et les lames du collecteur.

Les balais présentent des polarités alternées. Ainsi, les balais de polarité positive sont reliés électriquement, via leur tresse respective, à un connecteur inter-balais auquel est également connecté électriquement le fil d'alimentation issu du contacteur du démarreur. Par ailleurs, les balais destinés au retour de courant sont reliés électriquement à la masse de la machine au moyen de leur tresse respective soudée sur la platine.

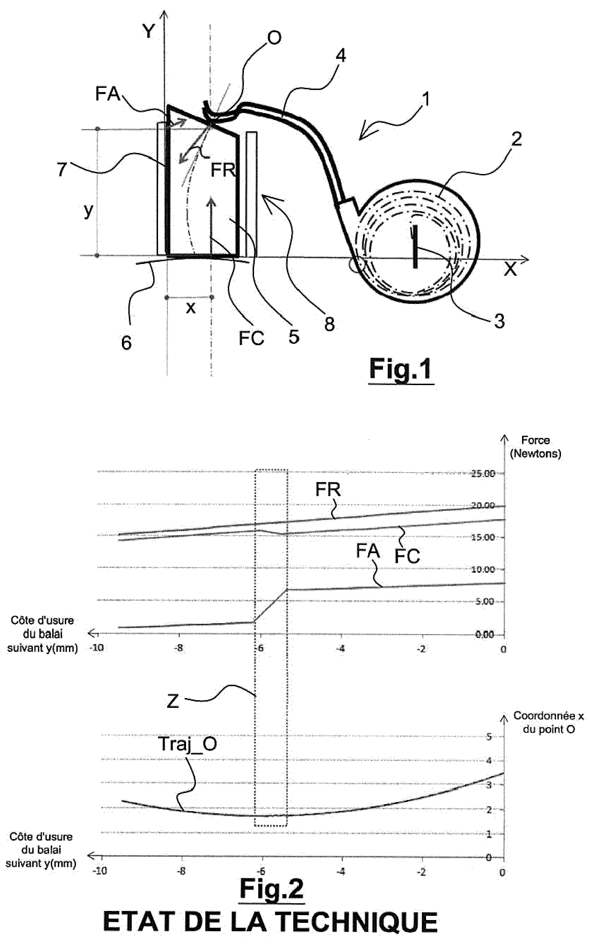

Comme on peut le voir sur la figure 1, dans certaines configurations de porte-balais, il est connu d'utiliser un ressort 1 de type à spirales comprenant une partie enroulée 2 montée sur une patte 3 ainsi qu'un bras 4 s'étendant à partir d'une extrémité de la partie enroulée 2 destiné à venir en appui sur une face d'extrémité du balai 5 opposée à la face en contact avec les lames du collecteur 6.

Par rapport à un ressort de type hélicoïdal, le ressort à spirales 1 présente l'inconvénient de déplacer sa surface de contact avec le balai 5 au fur et à mesure de l'usure du balai 5. Ce déplacement est dû au fait que le point de contact O entre le bras 4 du ressort 1 et le balai 5 présente une trajectoire de forme elliptique dans le plan XY, comme cela est illustré par la courbe Traj_O de la figure 2.

Par ailleurs, comme on peut voir sur la figure 1, le bras 4 du ressort 1 plaque le balai 5 contre les lames du collecteur 6 du fait de l'application de la force de poussée FR sur la face arrière du balai 5. La force FC correspond à la force de réaction du collecteur 6 sur le balai 5. En outre, le bras 4 du ressort 1 plaque le balai 5 contre une face latérale 7 de la cage à balai 8 du fait de l'inclinaison de la force FR du ressort 1 en direction de cette face 7, ce qui produit une force de frottement FA de la cage 8 sur le balai 5.

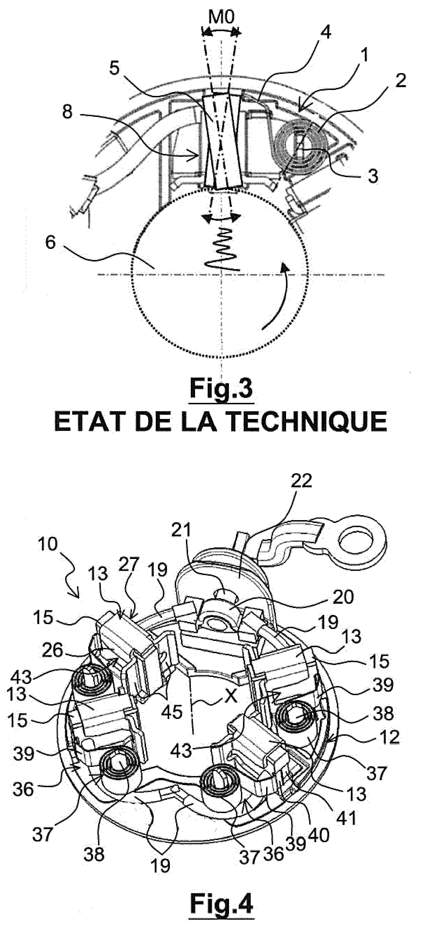

Au point de changement de direction de l'effort FR du ressort 1 sur le balai 5 correspondant au changement de direction dans la trajectoire du point de contact O, on observe une chute de la force de frottement FA de telle façon que le balai 5 n'est plus convenablement guidé dans la cage 8 (cf. zone Z de la figure 2). Cela a pour effet de produire des micro-oscillations MO du balai 5 à l'intérieur de la cage à balai 8, comme cela est illustré sur la figure 3. Ces micro-oscillations MO causent des étincelles entre les lames du collecteur 6 et le balai 5 engendrant une perte de la qualité de la commutation ainsi qu'une usure prématurée du balai 5 par électro-érosion.

L'invention vise à remédier efficacement à ces inconvénients en proposant un ensemble pour porte-balais de moteur électrique de démarreur de véhicule automobile comportant:
- un balai,
- un ressort à spirales comportant:
   - une partie enroulée,
   - un bras ayant une zone d'appui contre une portion d'une face dudit balai pour la mise en contact d'une autre face dudit balai avec un collecteur,
- une cage à balai dans laquelle est positionné ledit balai,

Caractérisé en ce que ledit ensemble comprend en outre une couche de réduction de frottement située entre ladite zone d'appui dudit ressort à spirales et ladite portion de la face d'appui dudit balai.

Cette couche de réduction de frottement permet de s'assurer que l'effort de frottement de la cage à balai sur le balai présente sensiblement la même direction tout au long du déplacement du point de contact entre le bras du ressort et le balai.

En effet, lors de l'usure, la portion en contact du bras du ressort avec le balai se déplace sur le balai, cependant ce déplacement est très lent du fait de l'usure du balai qui se fait à très long terme. Ainsi lors des vibrations du balai, les différences de forces du ressort sur le balai varient moins entre les deux extrêmes de la vie du balai. On a donc une meilleure gérance de l'usure du balai.

Selon une réalisation, ladite couche de réduction de frottement est fixée sur ledit balai, et ladite couche de réduction de frottement présente un coefficient de frottement inférieur au coefficient de frottement de la matière de la face dudit balai destinée à être en contact avec ledit collecteur.

Selon une réalisation, ladite couche de réduction de frottement est fixée sur ledit ressort à spirales, et ladite couche de réduction de frottement présente un coefficient de frottement inférieur au coefficient de frottement de la matière de ladite partie enroulée dudit ressort à spirales.

Cela permet d'ajouter la couche sur le ressort avant le montage. En outre sur le balai le procédé n'est pas simple du fait que c'est une pièce comprenant de la poudre.

En outre cela évite d'ajouter une pièce supplémentaire fixé sur le balai ou le ressort pour accrocher la couche de revêtement.

Selon une réalisation, ladite couche de réduction de frottement est une couche de revêtement dudit ressort à spirales ou dudit balai.

Selon une réalisation, ladite couche de revêtement est déposée localement sur la zone d'appui dudit ressort à spirales ou sur ladite portion de la face d'appui dudit balai.

Selon une réalisation, ladite couche de revêtement est déposée sur l'ensemble dudit ressort à spirales ou sur les faces dudit balai en contact avec ladite cage à balai ou ledit ressort à spirales.

Selon une réalisation, ladite couche de réduction de frottement est surmoulée sur ledit bras dudit ressort à spirales ou sur ladite portion de la face d'appui dudit balai.

Selon une réalisation, ladite couche de réduction de frottement est formée par une pièce rapportée fixée sur ledit balai ou sur ledit bras dudit ressort à spirales. Cela permet de limiter les vibrations dues à la friction entre le bras du ressort et le balai.

Selon une réalisation, ladite couche de réduction de frottement est réalisée dans un matériau à base de résine fluoré.

Selon une réalisation, ledit matériau de ladite couche de réduction de frottement est choisi notamment parmi un ou plusieurs des matériaux suivants: le Teflon (marque déposée), le PTFE (Polytétrafluoroéthylène), le FEP (Éthylène-propylène fluoré), le PFA (Perfluoroalkoxy), le ETFE (Éthylène tétrafluoroéthylène), le Halar (Marque déposée), le Xylan (Marque déposée), ou le Rilsan (Marque déposée).

Selon une réalisation, le coefficient de frottement entre ledit balai et ledit ressort à spirales est compris entre 0,05 et 0,15.

Selon une réalisation, ledit ressort à spirales est réalisé dans un alliage à base de téflon.

Selon une réalisation, ladite portion de la face dudit balai contre laquelle est en appui la zone d'appui dudit bras dudit ressort à spirales forme un angle par rapport à un plan perpendiculaire à une paroi latérale dudit balai, et en ce que cet angle est compris entre 8 et 15 degrés.

Une telle configuration permet ainsi, par création d'une force tangentielle, de maintenir la force de frottement de la cage sur le balai à une valeur suffisante tout au long du déplacement du point de contact entre le bras du ressort et le balai au fur et à mesure de l'usure du balai, ce qui garantit un guidage optimum du balai dans la cage correspondante. En outre, la force de frottement générée n'est pas trop élevée. On limite ainsi la perte de pression du balai sur les lames du collecteur pour une commutation optimale.

Selon une réalisation, ledit angle est de préférence compris entre 10 et 15 degrés.

Selon une réalisation, ledit angle est de préférence compris entre 10 et 13 degrés.

L'invention a également pour objet un démarreur de véhicule automobile comportant un moteur électrique muni d'un ensemble pour porte-balais tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

L'invention vise à remédier efficacement à ces inconvénients en proposant un ensemble pour porte-balais de moteur électrique de démarreur de véhicule automobile comportant:
- un balai,
- un ressort à spirales comportant:
   - une partie enroulée,
   - un bras ayant une zone d'appui contre une portion d'une face dudit balai pour la mise en contact d'une autre face dudit balai avec un collecteur,
- une cage à balai dans laquelle est positionné ledit balai,
caractérisé en ce que ladite portion de la face dudit balai contre laquelle est en appui la zone d'appui dudit bras dudit ressort à spirales forme un angle par rapport à un plan perpendiculaire à une paroi latérale dudit balai, et en ce que cet angle est compris entre 8 et 15 degrés.

Une telle configuration permet ainsi, par création d'une force tangentielle, de maintenir la force de frottement de la cage sur le balai à une valeur suffisante tout au long du déplacement du point de contact entre le bras du ressort et le balai au fur et à mesure de l'usure du balai, ce qui garantit un guidage optimum du balai dans la cage correspondante. En outre, la force de frottement générée n'est pas trop élevée. On limite ainsi la perte de pression du balai sur les lames du collecteur pour une commutation optimale.

Selon une réalisation, ledit angle est de préférence compris entre 10 et 15 degrés.

Selon une réalisation, ledit angle est de préférence compris entre 10 et 13 degrés.

Selon une réalisation, ledit ensemble comprend en outre une couche de réduction de frottement située entre ladite zone d'appui dudit ressort à spirales et ladite portion de la face d'appui dudit balai. Cette couche de réduction de frottement permet de s'assurer que l'effort de frottement de la cage à balai sur le balai présente sensiblement la même direction tout au long du déplacement du point de contact entre le bras du ressort et le balai.

Selon une réalisation, ladite couche de réduction de frottement est fixée sur ledit balai, et ladite couche de réduction de frottement présente un coefficient de frottement inférieur au coefficient de frottement de la matière de la face dudit balai destinée à être en contact avec ledit collecteur.

Selon une réalisation, ladite couche de réduction de frottement est fixée sur ledit ressort à spirales, et ladite couche de réduction de frottement présente un coefficient de frottement inférieur au coefficient de frottement de la matière de ladite partie enroulée dudit ressort à spirales.

Selon une réalisation, ladite couche de réduction de frottement est une couche de revêtement dudit ressort à spirales ou dudit balai.

Selon une réalisation, ladite couche de revêtement est déposée localement sur la zone d'appui dudit ressort à spirales ou sur ladite portion de la face d'appui dudit balai.

Selon une réalisation, ladite couche de revêtement est déposée sur l'ensemble dudit ressort à spirales ou sur les faces dudit balai en contact avec ladite cage à balai ou ledit ressort à spirales.

Selon une réalisation, ladite couche de réduction de frottement est surmoulée sur ledit bras dudit ressort à spirales ou sur ladite portion de la face d'appui dudit balai.

Selon une réalisation, ladite couche de réduction de frottement est formée par une pièce rapportée fixée sur ledit balai ou sur ledit bras dudit ressort à spirales. Cela permet de limiter les vibrations dues à la friction entre le bras du ressort et le balai.

Selon une réalisation, ladite couche de réduction de frottement est réalisée dans un matériau à base de résine fluoré.

Selon une réalisation, ledit matériau de ladite couche de réduction de frottement est choisi notamment parmi un ou plusieurs des matériaux suivants: le Teflon (marque déposée), le PTFE (Polytétrafluoroéthylène), le FEP (Éthylène-propylène fluoré), le PFA (Perfluoroalkoxy), le ETFE (Éthylène tétrafluoroéthylène), le Halar (Marque déposée), le Xylan (Marque déposée), ou le Rilsan (Marque déposée).

Selon une réalisation, le coefficient de frottement entre ledit balai et ledit ressort à spirales est compris entre 0,05 et 0,15.

Selon une réalisation, ledit ressort à spirales est réalisé dans un alliage à base de téflon.

L'invention a également pour objet un démarreur de véhicule automobile comportant un moteur électrique muni d'un ensemble pour porte-balais tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, est une vue de dessus d'un ensemble formé par une cage à balai, un balai, et un ressort à spirales associé;
La figure 2, déjà décrite, est un graphique illustrant, en fonction de l'état d'usure du balai, l'évolution des différentes forces en présence de l'ensemble de la figure 1, ainsi que le déplacement du point de contact entre le bras du ressort et le balai correspondant;
La figure 3, déjà décrite, est une vue de dessus conforme à la figure 1 illustrant le problème de micro-oscillations du balai observé lorsque le balai n'est plus guidé convenablement dans la cage correspondante;
La figure 4 est une vue en perspective d'un porte-balais de moteur électrique muni d'ensembles selon la présente invention;
La figure 5 est une vue en perspective de la platine du porte-balais de la figure 4;
La figure 6 est une vue de dessus d'un ensemble selon l'invention formé par une cage à balai, un balai, et un ressort à spirales associé montrant les différentes forces auxquelles est soumis le balai;
La figure 7 est un tableau illustrant la force de frottement minimale de la cage sur le balai obtenue pour différentes configurations de l'ensemble selon la présente invention;
La figure 8 est un graphique illustrant, en fonction de l'état d'usure du balai, l'évolution des différentes forces en présence de l'ensemble pour porte-balais selon la présente invention, ainsi que le déplacement du point de contact entre le bras du ressort et le balai;
Les figures 9a à 9c sont des vues en perspective illustrant différents modes de réalisation du ressort à spirales appartenant à l'ensemble pour porte-balais selon la présente invention;
Les figures 10a à 10c sont des vues en perspective illustrant différents modes de réalisation du balai appartenant à l'ensemble pour porte-balais selon la présente invention;
La figure 11 est une vue en perspective éclatée illustrant un autre mode de réalisation de l'ensemble pour porte-balais selon la présente invention muni d'un élément intermédiaire de réduction de frottement positionné entre le ressort et le balai;

Sur les figures 4 à 11, les éléments identiques, similaires, ou analogues conservent la même référence d'une figure à l'autre.

La figure 4 montre un porte-balais 10 selon l'invention destiné à être utilisé avec un démarreur de véhicule automobile. Ce porte-balais 10 comporte une platine de support 12 de forme sensiblement annulaire sur laquelle est fixé un ensemble de cages 13 servant chacune de logement à un balai 15. Un axe X de la platine de support 12 correspond à l'axe du porte-balais 10.

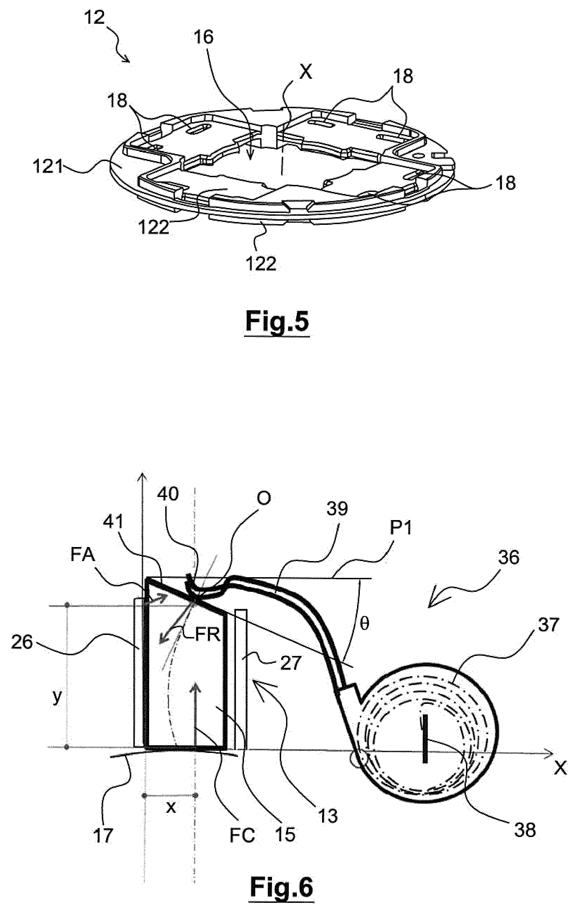

La platine de support 12 bien visible sur la figure 5 est une pièce monobloc comportant une plaque métallique 121 et des couches surmoulées 122 de part et d'autre de la plaque métallique 121. Les couches 122 sont réalisées dans une matière plastique assurant une bonne isolation électrique. Les couches surmoulées 122 recouvrent toutes les zones à risque de la platine 12, c'est-à-dire toutes les zones où pourrait apparaître un court-circuit. Les couches surmoulées 122 sont sensibles à la chaleur et déformables à partir d'une température prédéterminée afin de pouvoir provoquer un court-circuit en cas de surchauffe. Typiquement, la matière plastique utilisée pour les couches surmoulées 122 est une matière thermoplastique telle qu'un polyamide PA4.6 ou PA6.6 ou un polypropylène PPS chargé en fibres.

La platine de support 12 et les cages 13 qu'elle porte viennent se fixer sur un capot (non représenté) formant un palier arrière pour l'arbre de rotor de la machine électrique. En outre, la partie centrale de la platine 12 comporte un orifice 16 par lequel l'ensemble qu'elle forme avec les cages à balai 13 et les balais 15 est monté autour de l'arbre du rotor du démarreur.

Chaque balai 15 est monté à coulissement à l'intérieur d'une cage 13 laquelle est ouverte du côté de l'axe X pour permettre la mise en contact électrique des balais 15 avec des lames portées par un collecteur 17 d'un rotor de machine électrique.

Les balais 15 présentent des polarités alternées. Ainsi, les balais 15 de polarité positive sont reliés électriquement, via leur tresse 19 respective, à un connecteur inter-balais 20 auquel est également connecté électriquement le fil d'alimentation issu du contacteur du démarreur. En l'occurrence, le connecteur inter-balais 20 est relié au fil d'alimentation via un pion 21 traversant un passe-fil 22 coopérant avec la carcasse du démarreur pour assurer l'étanchéité du porte-balais 10.

Les balais positifs 15 et leurs cages 13 correspondantes sont isolés électriquement de la polarité négative pour un bon fonctionnement du démarreur. Cette isolation est obtenue par les couches surmoulées 122. Les tresses souples 19 sont avantageusement en cuivre ou en alliage de cuivre pour faciliter le soudage sur la plaque 121. Les tresses 19 pourront également jouer un rôle de fusible en cas de surintensité due à un dysfonctionnement du démarreur. Par ailleurs, les balais 15 de polarité négative destinés au retour de courant sont reliés électriquement à la masse de la machine au moyen de leur tresse 19 respective soudée sur la plaque 121 de la platine 12.

Plus précisément, chaque cage 13 présente un logement 23 pour le balai 15 délimité par deux parois latérales 26, 27 parallèles en vis-à-vis reliées entre elles par une paroi 28 de liaison supérieure. Chaque cage 13 pourra par exemple être obtenue par pliage d'une plaquette de tôle mince de manière à former sensiblement un oméga dont les branches d'extrémité sont fixées sur la platine 12 via un dispositif de fixation. A cet effet, le dispositif de fixation pourra comporter des jambes insérées dans les ouvertures 18 de la platine 12 (cf. figure 5) et rabattues l'une vers l'autre contre la platine 12. Alternativement, le système de fixation comporte des rivets traversant la platine 12 et les branches de la cage à balai 13.

Par ailleurs, un ressort à spirales 36 associé à chaque cage 13 sollicite radialement le balai 15 correspondant vers des lames de contact du collecteur 17. A cet effet, chaque ressort 36 comporte une partie enroulée 37 formée par une pluralité de spires qui est montée autour d'une patte 38, ainsi qu'un bras 39 s'étendant depuis une extrémité de la partie enroulée 37. Le bras 39 présente une zone d'appui 40 contre une portion 41 de la face du balai 15 opposée à la face en contact avec les lames du collecteur 17. La zone d'appui 40 du bras 39 présente en l'occurrence une forme incurvée.

La patte 38, qui s'étend axialement par rapport à l'axe X, est en l'occurrence obtenue par pliage d'une des branches d'extrémité de la cage 13. Par ailleurs, les parois latérales 26, 27 comportent chacune une ouverture 43 pour le passage du bras 39 du ressort 36 et/ou de la tresse 19 du balai 15. Afin d'augmenter la rigidité des cages 13, ces dernières pourront être munies d'ailettes 45 s'étendant de part et d'autre de la face ouverte située du côté du collecteur 17.

La portion 41 de la face du balai 15 contre laquelle la zone d'appui 40 du bras 39 du ressort 36 est en appui forme un angle θ par rapport à un plan P1 perpendiculaire à une paroi latérale 26, 27, c'est-à-dire le plan P1 passant par la face en contact avec le collecteur 17, comme cela est visible sur la figure 6. Cette portion 41 de la face du balai 15 pourra notamment correspondre à la face d'appui toute entière du balai 15 qui forme un angle θ avec le plan P1, comme c'est le cas dans le mode de réalisation de la figure 6 notamment. Alternativement, la portion 41 inclinée correspond uniquement au fond d'une rainure dans laquelle est positionnée l'extrémité du bras 39, comme cela est illustré sur la figure 4.

Ainsi, comme on peut le voir sur la figure 6, le bras 39 du ressort 36 plaque le balai 15 contre les lames du collecteur 17 du fait de l'application de la force de poussée FR sur la portion 41 de la face d'appui du balai 15. La force FC correspond à la force de réaction du collecteur 17 sur le balai 15. En outre, le bras 39 du ressort 36 plaque le balai 15 contre une face d'une paroi latérale 26 de la cage à balai 13 du fait de l'inclinaison de la portion 41 du balai 15 contre laquelle est en appui le bras 39 du ressort 36, ce qui produit une force de frottement FA de la cage 13 sur le balai 15.

Afin de garantir un guidage optimum du balai 15 dans la cage 13, il est nécessaire de conserver une force de frottement FA de la cage 13 sur le balai 15 tout au long du déplacement du point de contact O entre le bras 39 du ressort 36 et le balai 15 au fur et à mesure de l'usure du balai 15. En particulier, la force de frottement FA doit être maintenue à une valeur suffisante au moment du changement de direction dans la trajectoire du point de contact O. Toutefois, cette force de frottement FA ne doit pas non plus être trop élevée, dans la mesure où cela engendrerait une perte importante de pression du balai 15 sur les lames du collecteur 17 qui nuirait à la qualité de la commutation.

Afin de respecter les deux contraintes précités, une valeur minimale FA_min de cette force de frottement FA obtenue pour un balai 15 usé est fixée de préférence à 20% de la force de poussée nominale FR_nom du ressort 36. Ainsi, pour un ressort 36 ayant une force de poussée nominale FR_nom de 20 Newtons, la valeur minimale de la force de frottement FA que l'on cherche à obtenir est proche de 5 Newtons.

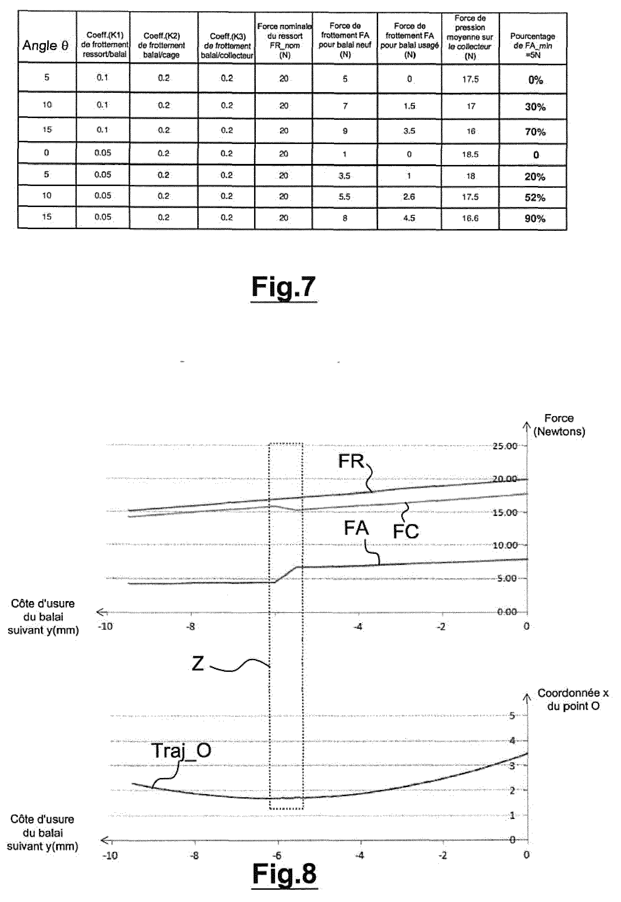

Le tableau de la figure 7 indique dans la colonne la plus à droite le pourcentage de cette valeur minimale de force de frottement FA_min obtenu pour différents paramètres du dispositif. Dans ce tableau, le coefficient de frottement K2 entre le balai 15 et la cage 13 est constant et vaut 0.2, le coefficient de frottement K3 entre le balai 15 et le collecteur 17 est constant et vaut 0.2, la force de poussée nominal FR_nom du ressort 36 est constante et vaut 20 Newtons.

On s'aperçoit que la valeur la plus proche de FA min (90% de FA_min) est obtenue pour un angle θ de l'ordre de 15° et pour un coefficient K1 de frottement entre le ressort 36 et le balai 15 valant 0.05.

Cela est corroboré par la courbe de la figure 8 qui montre que, pour une telle configuration, la chute de la force de frottement FA est limitée dans la zone Z, de telle sorte que la force de frottement FA est proche de 5 Newtons après le changement de direction dans la trajectoire Traj_O du point de contact O. En variante, les coefficients K2 et K3 pourront varier en fonction de l'application et la force de poussée nominale FR_nom du ressort 36 pourra être comprise entre 15 et 25 Newtons.

Plus généralement, afin d'obtenir une valeur minimale acceptable de la force de frottement FA_min, l'angle θ doit avoir une valeur comprise entre 8 et 15 degrés. L'angle θ est de préférence compris entre 10 et 15 degrés, et dans un mode de réalisation avantageux compris entre 10 et 13 degrés.

Par ailleurs, avantageusement, le coefficient K1 de frottement entre la zone d'appui 40 du bras 39 du ressort 36 et la portion 41 correspondante de la face du balai 15 est compris entre 0,05 et 0,15. Ce coefficient K1 de frottement réduit permet de s'assurer que la force de frottement F A de la cage 13 sur le balai 15 présente sensiblement la même direction tout au long du déplacement du point de contact O.

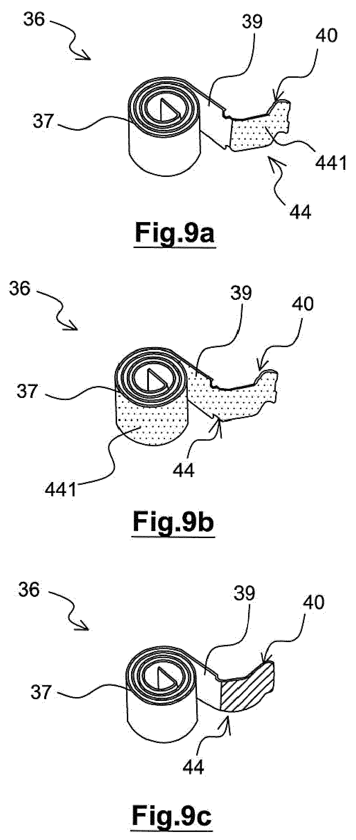

Afin d'obtenir un tel coefficient K1 de frottement réduit, une couche de réduction de frottement 44 est située entre la zone d'appui 40 du ressort 36 et la portion 41 de la face d'appui du balai 15. Comme cela est représenté sur les figures 9a à 9c, cette couche 44 de réduction de frottement est fixée sur le ressort 36. Dans ce cas, la couche 44 de réduction de frottement comprend un coefficient de frottement inférieur au coefficient de frottement de la matière de la partie enroulée 37 du ressort 36.

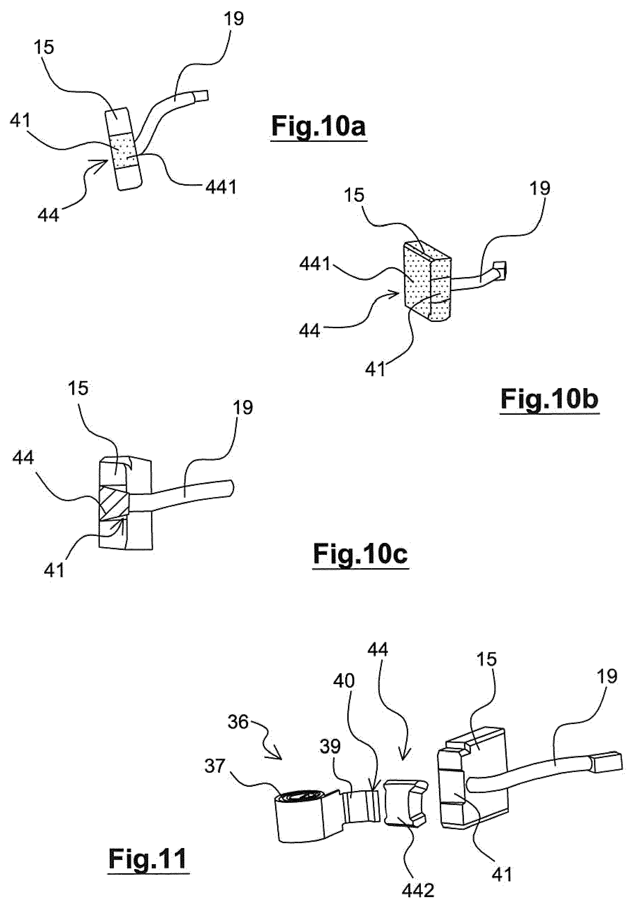

Alternativement, comme cela est représenté sur les figures 10a à 10c, cette couche 44 de réduction de frottement pourra être fixée sur le balai 15. Cette couche 44 présente alors un coefficient de frottement inférieur au coefficient de frottement de la matière de la face du balai 15 destinée à être en contact avec le collecteur 17.

Plus précisément, dans certains modes de réalisation, la couche de réduction de frottement 44 est une couche de revêtement 441 déposée localement sur la zone d'appui 40 du ressort 36 (cf. figure 9a) ou sur la portion 41 de la face d'appui du balai 15 (cf. figure 10a).

En variante, la couche de revêtement 441 est déposée sur l'ensemble du ressort 36, c'est-à-dire sur la partie enroulée 37 et le bras 39 (cf. figure 9b) ou sur les faces du balai 15 en contact avec la cage 13 ou le ressort 36 (cf. figure 10b). Pour ces modes de réalisation, la couche de revêtement 441 pourra être déposée notamment par trempage de l'élément (le ressort 36 ou le balai 15) dans un bain contenant des particules du matériau à faible coefficient de frottement, ou par pulvérisation.

Dans un autre mode de réalisation illustré par la figure 9c, la couche 44 de réduction de frottement est surmoulée sur le bras 39 du ressort 36. Dans ce cas, une extrémité du bras 39 comportant la zone d'appui 40 réalisée dans un matériau à faible coefficient de frottement est surmoulée sur l'autre partie du bras 39 réalisée en métal. En variante, la couche 44 de réduction de frottement est surmoulée sur la portion 41 de la face d'appui du balai 15 (cf figure 10c).

Dans un autre mode de réalisation montré sur la figure 11, la couche 44 de réduction de frottement est formée par une pièce rapportée 442 fixée, par exemple par encliquetage ou collage, sur le balai 15 ou sur le bras 39 du ressort 36. Cette pièce rapportée 442 pourra prendre la forme d'un amortisseur permettant de limiter les vibrations dues à la friction entre le bras 39 du ressort 36 et le balai 15.

De préférence, la couche 44 de réduction de frottement est réalisée dans un matériau à base de résine fluoré déposé sur le balai 15 et/ou le ressort 36 suivant des techniques connues de l'homme du métier.

Le matériau de la couche 44 de réduction de frottement est choisi notamment parmi un ou plusieurs des matériaux suivants: le Teflon (marque déposée), le PTFE (Polytétrafluoroéthylène), le FEP (Éthylène-propylène fluoré), le PFA (Perfluoroalkoxy), le ETFE (Éthylène tétrafluoroéthylène), le Halar (Marque déposée), le Xylan (Marque déposée), ou le Rilsan (Marque déposée).

L'homme du métier pourra bien entendu modifier la configuration du porte-balais 10 précédemment décrit sans sortir du cadre de l'invention définie ci-après par les revendications.

Ainsi, en variante, le ressort 36 est réalisé dans un alliage à base de téflon.

En variante, la couche 44 de réduction de frottement pourra être constituée par une couche de liquide de lubrification, tel que de l'huile ou une émulsion d'huile et d'eau.

En variante, le porte-balais 10 comporte plus de quatre balais 15, chaque balai 15 pouvant par exemple être associé à un autre balai positionné du côté opposé de la platine 12.

Le porte-balais 10 est ici un porte-balais de moteur électrique d'un démarreur de véhicule automobile. En variante, le porte-balais 10 pourrait également appartenir à un alternateur ou à un alterno-démarreur.

## Revendications

1. Ensemble pour porte-balais (10) de moteur électrique de démarreur de véhicule automobile comportant:
- un balai (15),
- un ressort à spirales (36) comportant:
- une partie enroulée (37),
- un bras (39) ayant une zone d'appui (40) contre une portion (41) d'une face dudit balai (15) pour la mise en contact d'une autre face dudit balai (15) avec un collecteur (17),
- une cage à balai (13) dans laquelle est positionné ledit balai (15),
**caractérisé en ce qu'**il comprend en outre une couche (44) de réduction de frottement située entre ladite zone d'appui (40) dudit ressort à spirales (36) et ladite portion (41) de la face d'appui dudit balai (15).

2. ensemble selon la revendication précédente, **caractérisé en ce que** ladite couche (44) de réduction de frottement est fixée sur ledit balai (15) et **en ce que** ladite couche (44) de réduction de frottement présente un coefficient de frottement inférieur au coefficient de frottement de la matière de la face dudit balai (15) destinée à être en contact avec ledit collecteur (17).

3. Ensemble selon la revendication 1, **caractérisé en ce que** ladite couche (44) de réduction de frottement est fixée sur ledit ressort à spirales (36), et **en ce que** ladite couche (44) de réduction de frottement présente un coefficient de frottement inférieur au coefficient de frottement de la matière de ladite partie enroulée (37) dudit ressort à spirales (36).

4. Ensemble selon l'une quelconque des revendications 1 à 3, **caractérisé en ce que** ladite couche (44) de réduction de frottement est une couche de revêtement (441) dudit ressort à spirales (36) ou dudit balai (15).

5. Ensemble selon la revendication 4, **caractérisé en ce que** ladite couche de revêtement (441) est déposée localement sur ladite zone d'appui (40) dudit ressort à spirales (36) ou sur ladite portion (41) de la face d'appui dudit balai (15).

6. Ensemble selon la revendication 4, **caractérisé en ce que** ladite couche de revêtement est déposée sur l'ensemble dudit ressort à spirales (36) ou sur les faces dudit balai (15) en contact avec ladite cage à balai (13) ou ledit ressort à spirales (36).

7. Ensemble selon l'une quelconque des revendications 1 à 3, **caractérisé en ce que** ladite couche (44) de réduction de frottement est surmoulée sur ledit bras (39) dudit ressort à spirales (36) ou sur ladite portion (41) de la face d'appui dudit balai (15).

8. Ensemble selon l'une quelconque des revendications 1 à 3, **caractérisé en ce que** ladite couche (44) de réduction de frottement est formée par une pièce rapportée (442) fixée sur ledit balai (15) ou sur ledit bras (39) dudit ressort à spirales (36).

9. Ensemble selon l'une quelconque des revendications 1 à 11, **caractérisé en ce que** ladite couche (44) de réduction de frottement est réalisée dans un matériau à base de résine fluoré.

10. Ensemble selon la revendication 9, **caractérisé en ce que** ledit matériau de ladite couche (44) de réduction de frottement est choisi notamment parmi un ou plusieurs des matériaux suivants: le Teflon (marque déposée), le PTFE (Polytétrafluoroéthylène), le FEP (Éthylène-propylène fluoré), le PFA (Perfluoroalkoxy), le ETFE (Éthylène tétrafluoroéthylène), le Halar (Marque déposée), le Xylan (Marque déposée), ou le Rilsan (Marque déposée).

11. Ensemble selon l'une quelconque des revendications 1 à 10, **caractérisé en ce que** le coefficient de frottement entre ledit balai (15) et ledit ressort à spirales (36) est compris entre 0,05 et 0,15.

12. Ensemble selon l'une quelconque des revendications 1 à 11, **caractérisé en ce que** ledit ressort à spirales (36) est réalisé dans un alliage à base de téflon.

13. Démarreur de véhicule automobile comportant un moteur électrique muni d'un ensemble tel que défini selon l'une quelconque des revendications précédentes.
